# EUROPÄISCHE PATENTANMELDUNG

(11) **EP 0 697 628 A1**
(43) Veröffentlichungstag der Anmeldung: **21.02.1996**
(21) Anmeldenummer: 94810471.6
(22) Anmeldetag: 16.08.1994
(51) Int. Cl.: G03D 15/00, G03B 27/73

(54) **Verfahren und Vorrichtung zur Erzeugung von Index-Prints auf bzw. mit einem photographischen Printer**

(71) Anmelder: GRETAG IMAGING AG, CH-8105 Regensdorf (CH)
(72) Erfinder: Frick, Beat, Dr., CH-8107-Buchs (CH); Wahli, Robert, CH-8107-Buchs (CH); Nussbaumer, Max, CH-5454-Bellikon (CH)
(74) Vertreter: Kleewein, Walter, Dr.

(57) **Zusammenfassung**

Bei der Auftragsbearbeitung in einem photographischen Printer wird ein entwickelter Vorlage-Filmstreifen (13) in einer Abtaststation (12) des Printers Negativ für Negativ punktweise abgetastet. Aus den Abtastsignalen werden Dichtewerte für die Belichtungszeitbestimmung in drei Teilfarben und Angaben über die Bildfeldnummer (8) des abgetasteten Negativs gewonnen, und diese Informationen werden unter Zuordnung der ermittelten drei Teilbelichtungszeiten zu der entsprechenden Bildnummer in einem Speicher (52) abgelegt. Alle Negative des Vorlage-Filmstreifens (13) werden unter Verwendung der ermittelten Belichtungszeiten der Reihe nach in vergrössertem Massstab auf Photopapier (15) belichtet.

In einem weiteren Schritt wird eine Anzahl aufeinanderfolgender Negative des Filmstreifens (13) in natürlichem oder reduziertem Massstab in Matrixform auf ein einziges Blatt des genannten Photopapiers (15) belichtet, wobei die jedem Negativ zugeordnete Bildfeldnummer (8) ebenfalls aufbelichtet wird und die aus dem anfänglichen Abtastvorgang gespeicherten Belichtungsdaten als Basis für die Belichtung der einzelnen Teilbilder (7) herangezogen werden und nebst den Belichtungen der Negative weitere Informationen im Zusammenhang mit dem Filmstreifen (13) aufbelichtet werden.

Im letzten Schritt wird schliesslich das Photopapier (15) mit den Vergrösserungen und den Index-Prints (2) entwickelt.

## Beschreibung

Die Erfindung betrifft ein Verfahren und eine Vorrichtung zur Erzeugung von Index-Prints auf bzw. mit einem photographischen unter gemäss den Oberbegriffen der unabhängigen Ansprüche 1 und 29.

Die vorliegende Erfindung befasst sich mit photographischen Printern im allgemeinen und mit der Vorgehensweise und der Gerätegestaltung im besonderen, um auf solchen Printern zusätzlich zur normalen Aufgabe des Vergrösserns photographischer Bildvorlagen Index-Prints erzeugen zu können.

Definitionsgemäss ist ein Index-Print eine einzelne Papierkopie mit einer Matrix von kleinen Bildern, die separaten Negativen auf einem photographischen Filmstreifen entsprechen. Index-Prints erfüllen für den Photoamateur ein praktisches Bedürfnis, erlauben sie doch, vom bildmässigen Inhalt eines Filmstreifens über die Zwischenstufe eines positiven Aufsichtsbildes Kenntnis zu nehmen, ohne dass der Film selbst betrachtet und berührt werden müsste. Dies stellt eine grosse Erleichterung insbesondere im Zusammenhang mit Negativfilmen dar, ist es doch für den ungeübten Benutzer wegen der Farbumkehr und der Filmmaske schwierig, den Bildinhalt von Farbnegativen zu beurteilen.

Index-Prints sind in jüngerer Zeit durch die Popularisierung der Videotechnologie in Form von Photo-CDs bekannt geworden. Sie stellen in dieser Anwendung ein eigentliches Inhaltsverzeichnis der Bilder dar, die auf der Photo-CD enthalten sind. Dabei ist jedem Bild insbesondere auch seine Adresse auf der CD zugeordnet, so dass das Bild direkt zur Präsentation auf einem Monitor aufgerufen werden kann. Beachtenswert in diesem Zusammenhang ist, dass der Index-Print zur ursprünglichen Bildvorlage (Negativ-Filmstreifen, Diapositiv etc.) keine direkte Beziehung mehr aufweist.

Photographische Kopieranstalten arbeiten üblicherweise nicht mit Index-Prints, wenngleich die Technologie dafür an sich vorhanden wäre. Möglicherweise ist das Bedürfnis für Index-Prints hier nicht so ausgeprägt, weil die Qualität der Kameras, des photographischen Materials und der Verarbeitungsgeräte im Photolabor einen Stand erreicht hat, der einen sehr hohen Prozentsatz guter Bilder bereits im Erstdurchgang gewährleistet. Für Nachbestellungen sind zudem besondere Hilfen erar-beitet worden, die eine zweifelsfreie Identifikation jener Negative erlauben, von denen weitere Kopien gewünscht werden.

Einzelne Verarbeitungslabors offerieren allerdings sogenannte Streifenkopien, auch als Archivkopien oder Proof Prints bezeichnet. Dies sind leicht vergrösserte (zum Beispiel 150%) Aufsichtsbilder von den auf einem Filmstreifen enthaltenen Vorlagenegativen. Sie werden auf speziellen oder für den Zweck umstellbaren Produktionsprintern erzeugt, wobei meist auch die zugehörige Negativnummer mitkopiert wird. Wie der Name andeutet, sind Streifenkopien Bilder auf einem schmalen Papierband, das nach jeweils einer vorgegebenen Anzahl Bilder in Streifen geschnitten wird. Es handelt sich in diesem Fall also nicht eigentlich um einen Index-Print in Matrix-Darstellung. Gleiches gilt für die sogenannten Blattkopien. Hier wird der entwickelte Film in Streifen geschnitten, von denen jeder eine Anzahl Negative enthält. Mehrere solcher Streifen werden sodann nebeneinander auf ein Blatt unbelichteten Photopapiers gelegt und im Kontaktverfahren kopiert. Zwar liegt in diesem Fall eine matrix-ähnliche Struktur vor, doch weicht das Papierformat (z.B. A4) so stark von jenem der normalen Einzelbild-Vergrösserungen ab, dass für die Blattkopie spezielle Gerätschaften erforderlich sind und Produktionsprinter nicht mehr eingesetzt werden können. Der Kunde erhält in beiden Fällen die Möglichkeit, nur von jenen Negativen Vergrösserungen zu bestellen, die er als besonders gut gelungen oder wertvoll betrachtet. Der zusätzliche Aufwand für dieses zweistufige Verfahren und die ihm inhärente Tendenz zur Reduktion der Auftragsgrösse lassen es verständlich erscheinen, weshalb Index-Prints von den Labors kaum gefördert werden.

Als Technologie zur Erzeugung von Index-Prints stehen im Prinzip zwei Verfahren zur Verfügung. Beim ersten werden die Bildfelder auf dem Negativfilm durch optische Projektion in natürlichem oder verkleinertem Massstab auf Photopapier kopiert. Im Prinzip bestehen - abgesehen vom unterschiedlichen Vergrösserungsmassstab - kaum Unterschiede zur klassischen Arbeitsweise eines photographischen Printers.

Beim zweiten Verfahren präsentiert sich die Technologie merklich verschieden. Hier wird nämlich das Vorlagenegativ zunächst durch einen optischen Abtaster in eine grosse Anzahl einzelner Bildpunkte zerlegt, die ihrerseits in drei Farben aufgespalten, als digitale Zahlenwerte dargestellt und abgespeichert werden. Von den derart gespeicherten Bildinhalten einer Anzahl aufeinanderfolgender Negative eines Filmstreifens werden anschliessend über einen Video-Printer geeigneter Bauart (CRT-Belichter, Thermodrucker, Laserdrucker o.ä.) in einem Index-Print zusammengefasste Aufsichtsbilder erzeugt.

Beispiele dieser Technologie finden sich in US-A-4,903,068 und US-A-4,933,773 sowie in EP-A-0 543 233. Bei der US-A-4,903,068 wird zur Erzeugung der Kundenkopie das Vorlagenegativ mit dem unmodulierten Leuchtfleck einer S/W-Kathodenstrahlröhre punktweise abgetastet und über ein Vergrösserungsobjektiv und drei passend gewählte Auszugsfilter farbsequentiell auf Photopapier übertragen. Während dieses Vorgangs wird ein Teil des Abtastlichtstrahls noch vor dem Vergrösserungsobjektiv durch einen teilreflektierenden Spiegel zu einem Photoempfänger mit geeigneter Sammeloptik ausgelenkt. Die dabei erzeugten Bildsignale werden digitalisiert und für jedes Negativ als Datensatz mit drei Farbdichtewerten abgespeichert. Nach jeweils einer vorbestimmten Anzahl kopierter Negative werden die gespeicherten Bildinformationen aus dem Speicher abgerufen und elektronisch zu einem zusammengesetzten Videobild mit einer entsprechenden Anzahl verkleinerter Bilder aufbereitet, welches sich als negatives S/W-Videobild für jeweils eine Teilfarbe auf der Kathodenstrahlröhre darstellen lässt. Dieses Monitorbild kann als Index-Print auf der nächsten freien Stelle des Photopapiers aufbelichtet werden. Während dieses Vorgangs darf sich natürlich kein Vorlagenegativ in der Filmbühne befinden.

Bei der US-A-4,933,773 dient eine gewöhnliche Halogenglühlampe als Lichtquelle für die Projektion des Vorlagenegativs auf das Photopapier. Der Unterschied und Vorteil gegenüber der US-A-4,903,068 liegt darin, dass alle Bildpunkte simultan übertragen werden und die Belichtungszeit daher verkürzt ist. Zur Erzeugung eines Index-Prints wird ein Teil des übertragenen Bildes in Richtung einer Videokamera ausgespiegelt, welche die Bildinformation aufnimmt, nach Farben trennt und digital codiert. Die entsprechenden Datensätze für die kopierten Negative werden in einem ersten Speicher abgelegt. Aus diesem werden die Daten für eine Gruppe von jeweils N aufeinanderfolgenden Negativen in ausgedünnter Form in einen zweiten Speicher übernommen, der sie zu einer Matrix mit N Elementen gruppiert. Diese Bildinformation lässt sich nach D/A-Wandlung als negativer Index-Print auf einer Kathodenstrahlröhre darstellen und mittels eines Farbfiltersatzes und eines Schwenkspiegels im Abbildungsstrahlengang des Printers auf das Photopapier übertragen. Sie kann auch dazu verwendet werden, nach Durchlauf durch einen Negativ-Positiv-Wandler als Index-Print auf einem Farbmonitor angezeigt zu werden.

Die EP-A-0 543 233 hat einen photographischen Printer zum Gegenstand, bei welchem die Abtaststation zur Analyse der Vorlagenegative und die Kopierstation getrennt sind. Die Daten aus der Abtaststation werden einerseits einem Belichtungszeitrechner zugeleitet, welcher die Kopierstation steuert, andererseits einem Index-Print-Generator, der die Daten der einzelnen Negative aufbereitet und als Matrix abspeichert. Diese dient als Vorlage für die Erzeugung eines Index-Prints auf einem Video-Printer. Alternativ kann der Index-Print auch auf das Photopapier des photographischen Printers aufbelichtet werden, falls dessen Lichtquelle eine Kathodenstrahlröhre ist, d.h. einen Bildaufbau Punkt um Punkt erlaubt.

Den oben erwähnten bekannten Lösungen ist das Merkmal gemeinsam, dass der Index-Print, falls er auf photographischem Papier erzeugt werden soll, immer mittels einer Kathodenstrahlröhre aufbelichtet wird, auf welcher die ganze Bildmatrix aus verkleinerten Einzelbildern dargestellt wird.

Die US-A-4,922,285 beschäftigt sich mit einem medizinischen Anwendungsbereich, und zwar der Computer-Tomographie. Hierbei werden von Tomogrammen Index-Prints hergestellt. Als Lichtquelle dient eine Kathodenstrahlröhre (CRT), die von Fall zu Fall nur ein Einzelbild darstellt. Dieses wird mittels eines Objektivs in verkleinerter Form auf den photographischen Film projiziert, wobei CRT und Objektiv baulich eine Projektionseinheit bilden, die auf einem Führungselement quer zur Transportrichtung des Films mechanisch versetzt werden kann. Eine Steuervorrichtung sorgt dafür, dass nach jedem Belichtungsvorgang die Projektionseinheit um einen gewissen Betrag versetzt wird, damit die verkleinerten Bilder auf dem Film in Querrichtung nebeneinander zu liegen kommen. Desgleichen sorgt die Steuereinrichtung dafür, dass der photographische Film mittels eines Transportrollenpaares um einen gewissen Betrag in seiner Längsrichtung verschoben wird, wenn eine Querreihe mit belichteten Bildfeldern aufgefüllt ist und eine weitere Querreihe auf dem Film Platz findet. Das Verfahren wir fortgesetzt, bis die vorgesehene Matrix an Bildfeldern auf dem Film belichtet ist. Der erzeugte Index-Print ist kein Aufsichtsbild sondern ein Negativ. Ferner ist über die Zuordnung von Nummern der Bilder auf dem Index-Print zu den Originalbildern auf der Kathodenstrahlröhre in der Druckschrift nichts ausgesagt.

Neuere Entwicklungen im Bereich der photographischen Materialien lassen es als wünschenswert erscheinen, Index-Prints zukünftig auch im Bereich der normalen Amateurphotographie und der damit verbundenen photographischen Kopieranstalten anzuwenden, d.h. ohne den Umweg über Videotechnologie. Massgebend dafür sind insbesondere neue Filmkassetten, wie sie etwa in der US-A-5,319,407 beschrieben sind. Diese sind dadurch gekennzeichnet, dass sie den Film nicht wie konventionelle Kassetten nur bis zur Entwicklung des belichteten Films aufnehmen, sondern nach Erledigung der Bearbeitungsvorgänge im Photolabor zusätzlich als Aufbewahrungsgefäss für diesen dienen. Vom Finishinglabor geht demnach der kopierte Film ungeschnitten in der Kassette an den Auftraggeber zurück. Ohne spezielle Werkzeuge kann dieser ihn nicht herausnehmen und betrachten. Der Film ist damit gegen Fingerabdrücke und Staub geschützt. Nachbestellungen einzelner Bilder sind möglich, falls von ihnen eine Vergrösserung existiert, die mit einer Bildnummer gekennzeichnet ist, welche mit jener auf dem Negativ übereinstimmt. Einfacher und für Archivierungszwecke dienlicher ist die Rücksendung eines Index-Prints an den Auftraggeber zusammen mit dem entwickelten Film in der Kassette. Für die Nachbestellung interessante Bilder lassen sich bequem und sicher anhand der Bildfeldnummern identifizieren.

Gemäss der EP-A-0 588 331 sind überdies schmälere Filme in einem Breitenbereich von 15 bis 30 mm zu erwarten, mit fester Vorgabe der Bildzentren wie beim älteren Format 126, jedoch mit einer Auswahl von Seitenverhältnissen (Bildlänge zu Bildhöhe) im Bereich von etwa 1.4 bis 3.0. Die neuen Filme eignen sich hervorragend für die automatische Verarbeitung, bieten sie doch eindeutige Positionierhilfen und stellen sie die Bildfeldnummern visuell, in Barcode und auf einer Magnetspur dar.

Es ist ein Hauptzweck der Erfindung, auf photographischen Printern bei der Erzeugung von Aufsichtsbildkopien ab einem Negativ-Filmstreifen Index-Prints anzulegen, auf denen eine Anzahl aufeinanderfolgender Negative dieses Filmstreifens in natürlichem oder verkleinertem Abbildungsmassstab zusammen mit der dazugehörigen Bildfeldinformation, insbesondere der dazugehörigen Bildfeldnummer wiedergegeben werden.

Es ist ein weiterer Zweck, die einzelnen Vorlage-Negative rein optisch auf den Index-Print zu übertragen, unter Verwendung der vorhandenen Lichtquellen.

Ein zusätzlicher Zweck besteht darin, die Teilbilder auf dem Index-Print in der dem Original in der Natur entsprechenden Orientierung (seitenrichtig und aufrechtstehend) darzustellen.

Noch ein Zweck ist es, die individuell korrigierten Teilbilder des Index-Prints mit den gleichen Dichte- und Farbkorrekturen wiederzugeben, die für die Bilder der Produktionskopien angewendet werden.

Ein anderer Zweck liegt darin, auf dem Index-Print zusätzliche Informationen anzubringen, die beispielsweise Aufschluss über den Namen des verarbeitenden Labors, Datum der Verarbeitung, Typ des kopierten Films, Film-Identifikations-Nummer und ähnliches geben.

Ein weiterer Zweck ist es, sogenannte Proof Prints (Archivkopien) zu erzeugen, die ihrem Wesen nach Index-Prints sind, jedoch im Gegensatz zu diesen die Vorlage-Negative in leicht vergrössertem Massstab wiedergeben und daher in der Regel grössere Papierformate erfordern, wie sie auf gewissen Minilabortypen möglich sind.

Noch ein Zweck besteht darin, auf einem Printer für das Umkehrverfahren Index-Prints für Diapositive zu erzeugen.

Die Aufgabe der Erfindung besteht somit im wesentlichen darin, ein Verfahren sowie eine entsprechende Vorrichtung zur Erzeugung von Index-Prints von einer Anzahl von photographischen Kopiervorlagen anzugeben, welches Verfahren auf einem photographischen Printer durchführbar und mit relativ geringem apparativem Aufwand realisierbar sein soll, so dass auch die entsprechende Vorrichtung relativ einfach und unter grösstmöglicher Nutzung von in einem photographischen Printer üblicherweise bereits vorhandenen Komponenten realisierbar ist.

Das diese Aufgabe erfüllende erfindungsgemässe Verfahren zur Erzeugung von Index-Prints auf einem photographischen Printer ist durch die Merkmale des unabhängigen Verfahrensanspruchs 1 gekennzeichnet. Es erzeugt die Index-Prints auf rein optisch-photographischem Weg und besteht dem Wesen nach typischerweise darin,
- einen Vorlage-Filmstreifen in einer Abtaststation Negativ für Negativ punktweise abzutasten, aus den Abtastsignalen Dichtewerte für die Belichtungszeitbestimmung in drei Teilfarben und Angaben über die Bildfeldnummer des abgetasteten Negativs zu gewinnen und diese Informationen unter Zuordnung der ermittelten drei Teilbelichtungszeiten zu der entsprechenden Bildnummer in einem Speicher abzulegen,
- alle Negative des Vorlage-Filmstreifens unter Verwendung der ermittelten Belichtungszeiten der Reihe nach in vergrössertem Massstab auf Photopapier zu belichten und
- in einem weiteren Schritt eine Anzahl aufeinanderfolgender Negative des Filmstreifens in natürlichem oder reduziertem Massstab in Matrixform auf ein einziges Blatt des genannten Photopapiers zu belichten, wobei
- die jedem Negativ zugeordnete Bildfeldnummer ebenfalls aufbelichtet wird und
- die aus dem anfänglichen Abtastvorgang gespeicherten Belichtungsdaten als Basis für die Belichtung der einzelnen Teilbilder herangezogen werden und
- nebst den Belichtungen der Negative weitere Informationen im Zusammenhang mit dem Filmstreifen aufbelichtet werden,
- woraufhin das Photopapier mit den Vergrösserungen und den Index-Prints entwickelt wird.

Die erfindungsgemässe Vorrichtung zur Erzeugung von Index-Prints auf einem photographischen Printer ist durch die Merkmale des unabhängigen Vorrichtungsanspruchs 29 gekennzeichnet. Sie erzeugt die Index-Prints auf rein optisch-photographischem Weg und umfasst typischerweise im wesentlichen ein lichtdichtes Gehäuse, an und in welchem die folgenden wesentlichen Baugruppen untergebracht sind: ein Lampenhaus mit vorzugsweise einer Halogenlampe als Lichtquelle, eine Filmbühne für die Aufnahme des Vorlage-Filmstreifens und dessen Transport, eine Abtaststation für die punktweise Abtastung der Bildfläche der Negative und die Ermittlung von deren Bildfeldnummern und filmspezifischer Daten, eine zugehörige Auswerte- und Speicherelektronik, ein Vergrösserungsobjektiv, ein Index-Print-Objektiv, eine Papierbühne für Transport und Positionierung des photographischen Papiers, ein Vorratsmagazin für dieses Papier und ein weiteres Magazin für die Aufnahme des belichteten Papiers oder eine lichtgeschützte Uebergabestation an eine nachgeschaltete Papierentwicklungsmaschine, sowie einen Rechner für die Koordination und Steuerung der Abläufe.

Vergrösserungsobjektiv und Index-Print-Objektiv sind im Strahlengang gegeneinander austauschbar und schliessen sich in der Anwendung gegenseitig aus. Das Index-Print-Objektiv liegt wegen des kleineren Abbildungsmassstabes näher beim Photopapier als das Vergrösserungsobjektiv. Im Gegensatz zu letzterem ist es in aktivem Zustand quer zur Transportrichtung des Photopapiers verschiebbar. Im Zusammenwirken mit der Papiervorschub-Steuerung ermöglicht diese Anordnung die Abbildung der Negative in Form einer Matrix auf dem Photopapier. Alternativ kann auch eine Verschiebbarkeit des Index-Print-Objektivs in zwei Dimensionen vorgesehen sein.

Weitere vorteilhafte Ausgestaltungen und Varianten des erfindungsgemässen Verfahrens und der entsprechenden Vorrichtung sind in den abhängigen Ansprüchen beschrieben.

Die Erfindung wird nachstehend anhand von verschiedenen Ausführungsbeispielen unter Bezugnahme auf die Zeichnung näher erläutert. In dieser zeigen:
- Fig. 1a: eine typische Normalkopie (Normalprint),
- Fig. 1b: einen der Normalkopie von Fig. 1a zugeordneten Index-Print,
- Fig. 2: eine schematische Darstellung des Printerteils eines Minilabors in einer Ausführungsform nach der Erfindung,
- Fig. 2a: ein Detail aus Fig. 2 in um 90 gedrehter Ansicht,
- Fig. 3: die Papierlauf-Baugruppe des Minilabors nach Fig. 2 detaillierter in perspektivischer Form,
- Fig. 4: die Filmlauf-Baugruppe des Minilabors nach Fig. 2 detaillierter in schematischer Form,
- Fig. 5: einen Index-Print-Filmstreifen zur verfahrensgemässen Verwendung,
- Fig. 6: einen Lösungsvorschlag zur Aufbelichtung variabler Daten auf den Index-Print in schematisierter Form,
- Fig. 7: Einzelheiten zur verkleinerten Aufbelichtung der Negative auf die Felder der Index-Print-Matrix,
- Fig. 8: eine Variante zur Positionierung der Index-Print-Negative mit den Rahmenbildern,
- Fig. 9: einen Lösungsvorschlag zur Einbelichtung von Bildfeldnummern und variablen Daten in das Rahmenbild,
- Fig. 10: einen Lösungsvorschlag zur Einbelichtung variabler Daten in die Randzone von Index-Prints,
- Fig. 11: ein Beispiel eines Streulichtabschirmungsmittels und
- Fig. 12: einen weiteren vorteilhaften Lösungsvorschlag zur Ein- bzw. Aufbelichtung von Bildfeldnummern und variablen Daten in bzw. auf den Index-Print.

Bei der nachstehenden Beschreibung der bevorzugten Ausführungsbeispiele anhand der Zeichnung sind identische oder von der Funktion her gleichwertige Teile mit den gleichen Bezugszeichen versehen. Der Einfachheit und des leichteren Verständnisses wegen wird die Erfindung mit Bezug auf den Printerteil eines Minilabs für Negativfilme beschrieben. Die Ausführungen gelten jedoch sinngemäss auch für Rollenprinter und für Geräte zur Verarbeitung von Umkehrfilmen sowie gerahmten Diapositiven. Ferner befasst sich die Beschreibung im wesentlichen mit den gegenüber dem Stand der Technik neuen Aspekten und apparativen Komponenten, wobei vorausgesetzt wird, dass der Fachmann moderne computergesteuerte Printer und entsprechende Herstellungsverfahren für photographische Kopien kennt und dazu keiner näheren Erläuterung bedarf. Typische Beispiele für moderne photographische Printer sind u.a. in den eingangs zitierten Druckschriften sowie beispielsweise auch in den US-Patentschriften US-A-4 951 084, US-A-5 016 043, US-A-5 036 351, US-A-5 041 869, US-A-5 119 125, US-A-5 164 765 und US-A-5 309 199 beschrieben.

Des weiteren wird im folgenden des leichteren Verständnisses wegen vom Regelfall ausgegangen, dass die individuellen Bildfeldinformationen, die den einzelnen Bildern des Index-Prints zugeordnet werden, die üblicherweise auf dem Filmstreifen bzw. den Kopiervorlagen vorhandenen und von diesen durch Abtastung abgelesenen und gespeicherten Bildfeldnummern sind. Die Erfindung ist jedoch nicht auf solche Bildfeldnummern beschränkt. So können als Bildfeldinformationen auch andere bildbezogene Bildfeldidentifkationsdaten verwendet werden, die z.B. während der Herstellung der Index-Prints individuell erzeugt werden oder in geeigneter Weise fest vorgegeben sind. Die Art der aufgebrachten bildbezogenen Bildfeldidentifikationsdaten kann z.B. auch in Abhängigkeit von auf dem Filmstreifen vorhandenen und von diesem abgelesenen film- und/oder bildfeldbezogenen Zusatzinformationen gewählt werden.

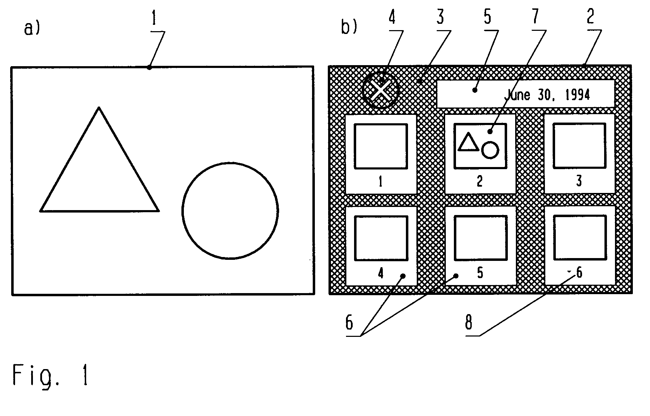

Fig. 1a zeigt ein Beispiel einer normalen photographischen Kopie (Vergrösserung, Normalprint), Fig. 1b zeigt ein Beispiel eines der normalen Kopie (Normalprint) gemäss Fig. 1a zugeordneten Index-Prints gemäss der Erfindung. Bei der Normalkopie 1 ist ein einzelnes Sujet dargestellt. Index-Print 2 enthält eine Matrix von mehreren Sujets in verkleinerter Darstellung. In einem Rahmenbild 3, das für alle Index-Prints gleichen Papierformats unverändert bleibt, ist Platz für ein Logo 4 des Verarbeitungslabors vorgesehen, ebenso ein Feld 5 für Informationen, die auftragsabhängig (Film-Identifikations-Nummer, FID) oder sonstwie veränderlich (Datum) sind. In matrixförmig nach Zeilen und Spalten angeordneten Aussparungen 6 des Rahmenbildes 3 finden die verkleinerten Index-Bilder 7 sowie die zugehörigen Bildfeldnummern 8 Platz. Die Anzahl der Index-Bilder bzw. der Elemente der Matrix richtet sich dabei nach den Abmessungen der Papierkopie, dem Verwendungszweck und der verlangten Interpretierbarkeit der photographischen Information. Sie kann von einigen wenigen bis zu sämtlichen auf einem Filmstreifen enthaltenen Bildern reichen.

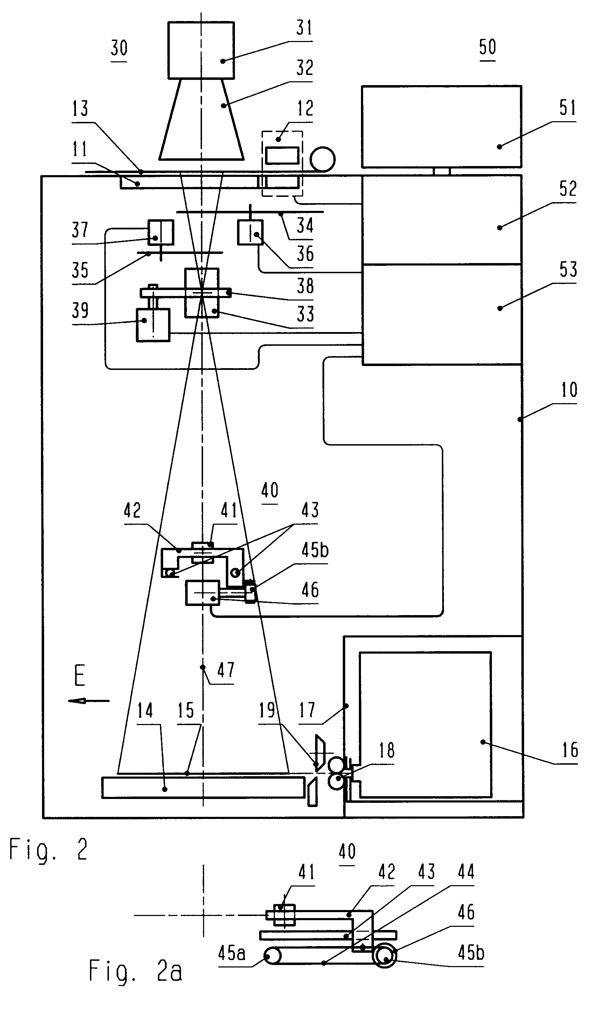

Fig. 2 stellt den Printerteil eines Minilabors dar, welches bekanntlich definitionsgemäss Filmentwicklung, photographische Belichtung und Papierentwicklung in einem Gerät vereinigt und im vorliegenden Fall nebst Normalkopien erfindungsgemäss zusätzlich noch Index-Prints erzeugen kann. In einem Gehäuse 10 ist eine Filmbühne 11 mit zugehöriger Abtaststation 12 zur Aufnahme eines Filmstreifens 13 angeordnet, überdies eine Papierbühne 14 zur Aufnahme eines Einzelblatts Photopapier 15 aus einer Papierkassette 16. Diese ist an eine Grundplatte 17 angedockt. Ein Rollenpaar 18 fördert das Photopapier auf die Papier bühne. Ein Rollmesser 19 schneidet es auf die verlangte Blattlänge.

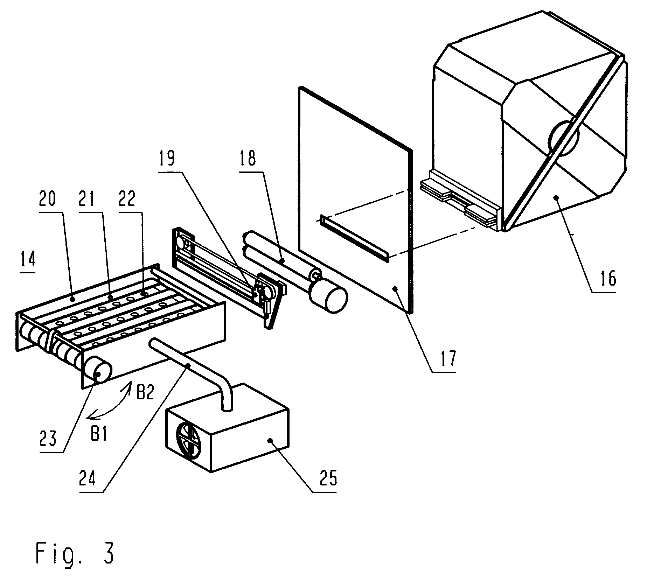

Fig. 3 zeigt die Papiertransport-Gruppe zum besseren Verständnis in perspektivischer Ansicht. Insbesondere ist die Papierbühne 14 detaillierter dargestellt.

Sie umfasst eine Vakuumkammer 20, die an ihrer Oberseite Transportbänder 21 zwischen Lochreihen 22 zum Kammerinnern aufweist. Die Transportbänder 21 werden von einem reversierbarenSchrittmotor 23 gemeinsam angetrieben. Die Vakuumkammer 20 ist über eine Leitung 24 mit einer Vakuumpumpe 25 verbunden, welche in der Kammer einen leichten Unterdruck zum Festhalten des Photopapiers erzeugt

Fig. 2 und Fig. 2a zeigen weiter ein Projektionssystem 30, bestehend aus Lichtquelle 31, Lichtschacht 32 und Projektionsobjektiv 33. Zur Einfärbung des Kopierlichts ist ein Farbfilterrad 34 vorhanden, mit einer Filterbestückung, die zumindest die drei Grundfilter Rot, Blau und Grün enthält. Zur Blockierung und Freigabe des optischen Strahlengangs dient ein Verschluss 35 (oder eine spezielle Dunkel-Stellung des Filterrads). Diese Elemente werden von Motoren 36 bzw. 37 angetrieben. Das Projektionssystem bildet jeweils ein Negativ des Filmsteifens 13 auf das unbelichtete Photopapier 15 ab. Das Vergrösserungsobjektiv 33 ist auf einem Schwenkarm 38 oder einem Objektiv-Karussell befestigt, welcher auf der Welle eines Motors 39 sitzt und das Objektiv 33 vollständig aus dem Strahlenraum ausschwenken kann, der durch die Abbildungsstrahlen zwischen Negativ und Photopapier gebildet wird.

Für die Aufbelichtung der Index-Prints ist eine Index-Print-Baugruppe 40 mit einem Index-Print-Objektiv (IP-Objektiv) 41 vorhanden. Dieses sitzt auf einem Transportschlitten 42, der seinerseits auf einem Paar Führungsschienen 43 montiert ist. Der Schlitten 42 wird von einem Zahnriemen oder Seilzug 44 angetrieben, der über ein Rollenpaar 45 a,b läuft. Ein Motor 46 ist über seine Welle mit der Antriebsrolle 45 b verbunden. Er kann das IP-Objektiv bei Bedarf in den Abbildungsstrahlengang, d.h. den Bereich der optischen Achse 47 einfahren. Diese wird durch die Verbindungslinie des Symmetriezentrums der Negativmaske in der Filmbühne und des Hauptpunktes des Projektionsobjektivs 33 bestimmt.

In Fig. 2a ist die Index-Baugruppe 40 im Interesse der Anschaulichkeit separat und um die optische Achse 47 um 90 verschwenkt dargestellt. In Wirklichkeit verläuft die Bewegungsrichtung des IP-Objektivs entsprechend Fig. 2 rechtwinklig zur Transportrichtung des Papiers.

Am und im Gehäuse 10 ist eine Elektronikbaugruppe 50 für die Bedienung und Steuerung des Gerätes angebracht, nämlich ein Tastatur- und Anzeigefeld 51, eine Auswerte- und Speichereinheit 52 für die Berechnung der Belichtungszeit und die Ermittlung der Bildfeldnummern, sowie ein Rechner 53 für die Steuerung der Abläufe.

Die Funktionsweise dieses Printers wird nun im Detail beschrieben. Es sei angenommen, dass die entwickelten Filme als Einzelfilme (Filmstreifen) vorliegen und von Hand eingelegt und entfernt werden und dass das Photopapier jeweils unmittelbar vor der Belichtung in einzelne Blätter geschnitten und anschliessend im (an sich bekannten) Einzelblattverfahren entwickelt wird. Ausserdem sollen von einem bestimmten Filmstreifen jeweils zunächst die einzelnen Negative vergrössert und anschliessend vom ganzen Filmstreifen ein Index-Print erstellt werden. Das Papierformat sei vorgegeben, ebenso das Filmformat. Das Projektionsobjektiv 33 und das Index-Print-Objektiv 41 seien in an sich bekannter Weise als Zoom- oder Wechsel-Objektive ausgebildet, um unterschiedlichen Papierformaten und Index-Prints mit unterschiedlichen Bilderzahlen Rechnung zu tragen.

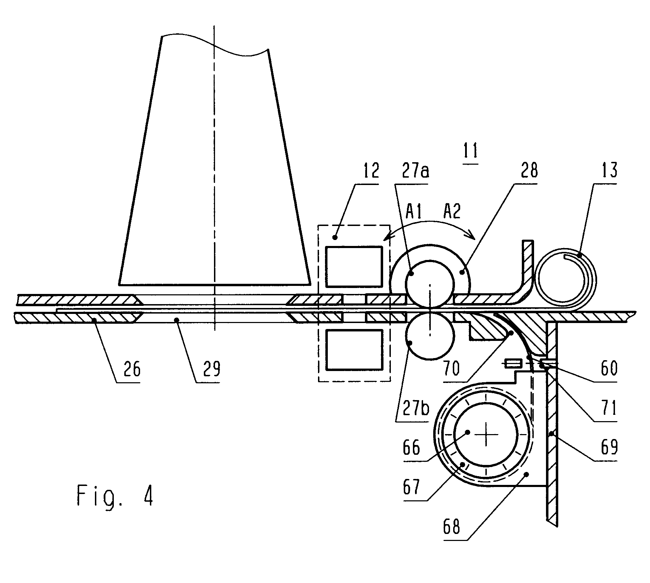

Anhand von Fig. 4 werden zunächst Einzelheiten der Filmbühne 11 erläutert.

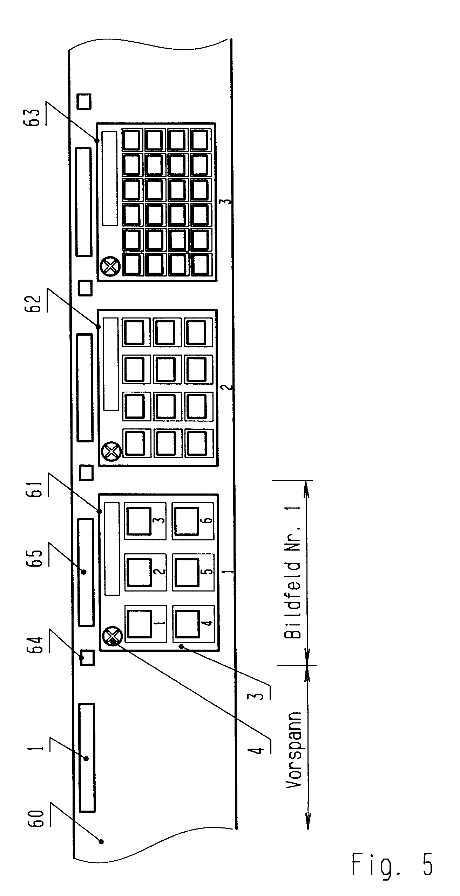

Ein Filmkanal 26 dient als Führung für den Filmstreifen 13. Ein Transportrollenpaar 27 a,b, das von einem reversierbaren Schrittmotor 28 angetrieben wird, fördert den Film mit gleichförmiger Geschwindigkeit durch den Filmkanal. Der Ablauf ist wie folgt: Aufgrund eines Startbefehls beginnt Schrittmotor 28 im Drehsinn A₂ zu rotieren. Filmstreifen 13 wird rechts in der Negativbühne 11 in den Filmkanal 26 eingelegt und dabei von den Transportrollen 27 a,b erfasst, die den Weitertransport veranlassen. Dabei durchläuft als erstes die Vorspannzone des Filmstreifens die Abtaststation 12 und anschliessend das Kopierfenster 29. Unter der Annahme, dass die Vorspannzone filmspezifische Daten wie die Film-Identifikations-Nummer (FID) und die Anzahl der Bildfelder in Form eines Barcode (9 in Fig. 5) enthält, werden diese in der Abtaststation 12 erfasst und in der Auswertestation 52 abgespeichert. Die Abtaststation kann beispielsweise aus einem linearen Photozellenarray für die Dichteanalyse des Bildinhaltes und einem Barcodeleser für die Informationen in einer Randspur des Negativs (z.B. FID- und Bildfeldnummern) sowie einem Sensor für Markierungen auf dem Filmstreifen bestehen, welche die genaue Lage jedes einzelnen Bildfeldes definieren. Während des Filmtransports werden diese Markierungen von der Abtaststation erfasst und deren Signale von der Elektronik ausgewertet, um den Transport anzuhalten, sobald ein Negativ im Fenster der Filmbühne kopierbereit positioniert ist. Beim geschilderten Ablauf ist dies erstmals für Negativ Nr. 1 der Fall. Die Belichtungszeiten für das positionierte Negativ wurden beim gleichförmigen Durchlauf des Negativs durch die Abtaststation 12 in der Auswertestation 52 aus den gemessenen Dichtedaten berechnet und im zugehörigen Speicher abgelegt. Auch die aus dem DX-Code in der Randspur des Negativs entschlüsselten Daten wie Filmtyp und Bildfeldnummer wurden gleichenorts gespeichert.

Unterdessen (Fig. 3) haben die Antriebsrollen 18 unbelichtetes Photopapier aus dem Papiermagazin 16 unter dem Messer 19 auf die Papierbühne 14 vorgeschoben. Dabei wurde über die Anzahl der Schritte des Antriebsmotors die Vorschublänge bestimmt und beim Erreichen der Soll-Länge das Papier vom Messer 19 geschnitten. Das Vakuum in der Vakuumkammer 20 der Papierbühne 14 ist dabei aktiviert. Es hält das geschnittene Blatt Photopapier auf den Transportbändern fest, während Schrittmotor 23 solange in Drehrichtung B₂ rotiert, bis dieses unter der optischen Achse zentriert ist.

Als nächste Operation wird die Belichtung ausgelöst. Sie läuft mehrstufig ab, indem aufgrund der ermittelten und in Station 52 gespeicherten Belichtungszeiten Verschluss 35 durch Ausschwenken aus seiner Ruhelage den Strahlengang freigibt, während Filterrad 34 nacheinander drei Farbfilter (R,G,B) für die Dauer der jeweils errechneten Belichtungszeit in den Strahlengang einschwenkt. Am Ende der Belichtung geht Verschluss 35 wieder in seine Sperrstellung. Das belichtete Blatt Photopapier 15 wird zum Papierentwicklungsteil (nicht dargestellt, Pfeil E) abtransportiert. Daraufhin kann ein neuer Transport- und Belichtungszyklus gestartet werden. Das Antriebsrollenpaar 18 schiebt eine entsprechende Länge neuen Photopapiers aus dem Papiermagazin 16 nach, die vom Messer 19 geschnitten wird. Filmstreifen 13 wird bis zum nächsten Negativ (Nr. 2) transportiert und dabei analysiert. Die anschliessende Belichtung beendet diesen zweiten Zyklus. Der Vorgang wiederholt sich automatisch solange, bis der ganze Filmstreifen kopiert ist. Nach Belichtung des letzten Negativs im Filmstreifen schiebt der Filmtransport diesen vollständig aus der Filmbühne hinaus, und der Papiertransport übergibt das letzte belichtete Blatt Photopapier an die Entwicklungsstation.

Die nächste Aufgabe besteht darin, den Index-Print für diesen Filmstreifen zu erzeugen. Im ersten Schritt dazu ist das Rahmenbild 3 mit dem Logo 4 aufzubelichten. Dafür ist ein Vorlage-Negativ in der Filmbühne erforderlich. Dieses kann gemäss dem Lösungsvorschlag nach Fig. 4 die gleichen Führungs- und Transportelemente benützen wie vorher der Filmstreifen. Der Filmführungskanal 26 ist nach den vorangegangenen Operationen frei von Filmstreifen 13. Er kann daher vorübergehend einen speziellen Index-Print-Filmstreifen (IP-Filmstreifen) 60 aufnehmen, der format-und typenmässig mit dem Streifen 13 übereinstimmt, jedoch gemäss Fig. 5 nur wenige Bildfelder 61, 62, 63 enthält. Diese entsprechen den Rahmenbildern 3 mit Logo 4 und Bildfeldnummern 8 des Index-Prints 2, wobei etwa Matrixfelder mit unterschiedlicher Zahl der Elemente den verschiedenen handelsüblichen Filmlängen zugeordnet sein können. Der IP-Fimstreifen ist in einer speziellen, von einem Schrittmotor 66 über eine Magnetkupplung 67 angetriebenen Filmkassette 68 enthalten, die auf einer Platte 69 unter der Filmbühne 11 angebracht ist. Der Filmstreifen 60 hat eine Ruheposition in einem Führungskanal 70, welche durch eine Lichtschranke 71 überwacht wird.

In einem ersten Schritt zur Aufbelichtung des Index-Prints wird von Motor 66 bei eingeschalteter Magnetkupplung 67 der IP-Filmstreifen 60 aus dem Führungskanal 70 in den Führungskanal 26 gestossen und dabei von den gleichzeitig in Rotation versetzten Transportrollen 27 a,b erfasst, die den Weitertransport übernehmen, während die Magnetkupplung 67 ausgeschaltet und Motor 66 stillgesetzt werden. In der Abtaststation 12 wird die Positionsnummer des durchlaufenden Negativs erfasst. Sie ist einer bestimmten Filmlänge zugeordnet, welche in der Auswertestation 52 mit der gespeicherten Länge des vorgängig kopierten Filmstreifens verglichen wird. Falls die beiden Längen übereinstimmen, wird das entsprechende Rahmenbild (z.B. 62) im Kopierfenster der Filmbühne positioniert.

Simultan mit diesen Aktionen hat der Papiertransport einen Vorschub ausgelöst, das Photopapier um eine Blattlänge vorgeschoben und geschnitten und das Blatt auf der Papierbühne symmetrisch zur optischen Achse positioniert. Nachdem nun alle erforderlichen Elemente (Negativ, Projektionsobjektiv und unbelichtetes Photopapier) in der richtigen Position sind, kann das Rahmenbild mit vorbestimmter Farbe und Belichtungszeit aufbelichtet werden. Die zugehörigen Parameter werden dem Speicher 52 entnommen. Das Rahmenbild enthält nebst der Bildmatrix mit den Bildfeldnummern nur noch das Firmenlogo. Nach Abschluss der Belichtung schalten sich Magnetkupplung 67 und Schrittmotor 66 wieder ein und ziehen den IP-Film-streifen 60 in seine Ruhestellung zurück. Die Transportrollen 27 a,b müssen während dieses Vorgangs soweit voneinander getrennt werden, dass der Filmstreifen berührungslos zwischen ihnen passieren kann. Diese Trennung kann über nicht dargestellte Magnete oder Motoren in Verbindung mit mechanischen Elementen erfolgen.

Im nächsten Schritt sind die variablen Informationen, beispielsweise Film-Identifikations-Nummer (FID) und Tagesdatum, aufzubelichten. Eine Möglichkeit besteht darin, diese Daten mittels einer LCD-(Flüssigkristall)-Matrix anzuzeigen und im Kontakt auf das Photopapier aufzubelichten. Alternativ kann die LCD-Matrix in den optischen Strahlengang eingespiegelt und vom IP-Objektiv 41 an der ausgesparten Stelle des Rahmenbildes auf dem Photopapier abgebildet werden. Anstelle der LCD-Matrix lässt sich auch eine LED-(Leuchtdioden)-Matrix oder eine Mini-Kathodenstrahlröhre als Display-und Belichtungsmedium einsetzen.

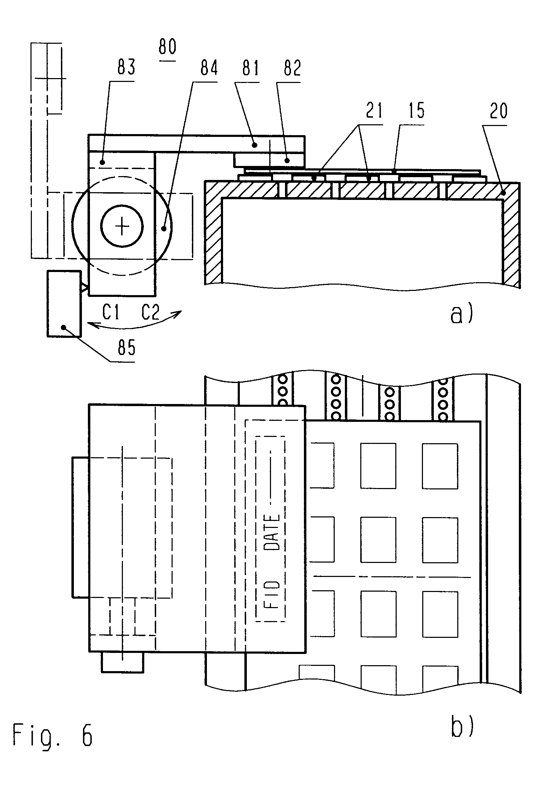

In Fig. 6 ist eine Lösung mit LCD-Matrix und Kontaktbelichtung skizziert. Das Photopapier 15 ruht auf stillstehenden Transportbändern 21 und wird durch den Unterdruck der Vakuumkammer 20 auf diesen fixiert. Eine Belichtungsbaugruppe 80 besteht aus einer Trägerplatte 81 für die LCD-Matrix 82, einem Haltebügel 83 für die Trägerplatte, einem reversierbaren Schrittmotor 84 und einem Endschalter 85. Der Haltebügel 83 ist fest mit der Welle des Schrittmotors 84 verbunden. In der Ruhestellung wird die Trägerplatte in vertikaler Lage ausserhalb des Abbildungsstrahlenganges des Projektionssystems gehalten (in Fig. 6 a gestrichelt skizziert). Zum Aufbelichten der variablen Index-Print-Daten wird als erstes die Trägerplatte um 90 verschwenkt, indem Motor 84 im Drehrichtungssinn C₁ in Gang gesetzt wird, bis Endschalter 85 die richtige Lage der LCD-Matrix 82 auf dem Photopapier anzeigt. Nunmehr kann die LCD-Matrix aktiviert werden. Die benötigte Daten- und Belichtungszeit-Information wird aus dem Speicher 52 geholt. Nach der Belichtungphase wird die LCD-Matrix wieder deaktiviert. Die Trägerplatte mit der Matrix schwenkt daraufhin in ihre Ruhestellung zurück. Die Endlage kann dabei über eine vorbestimmte Anzahl Schritte des Motors 84 festgelegt werden. Die exakte Lage ist dabei unkritisch. Diese Teilbelichtungsaufgabe ist daraufhin abgeschlossen.

Als nächstes sind die verkleinerten Bilder der Negative des Auftrags-Filmstreifens 13 auf die Index-Print-Matrix zu übertragen. Dazu sind einige Vorbereitungsarbeiten notwendig und müssen zunächst die Voraussetzungen im Abbildungssystem geschaffen werden. Zu diesem Zweck wird das Projektionsobjektiv 33 aus dem Strahlengang ausgeschwenkt, durch eine Schwenkbewegung um beispielsweise 90 oder nur soviel wie notwendig, um bei der Belichtung der Index-Prints nicht störend zu wirken. Das Index-Print-Objektiv 41 kann nunmehr eingefahren werden, und zwar bis exakt zur optischen Achse.

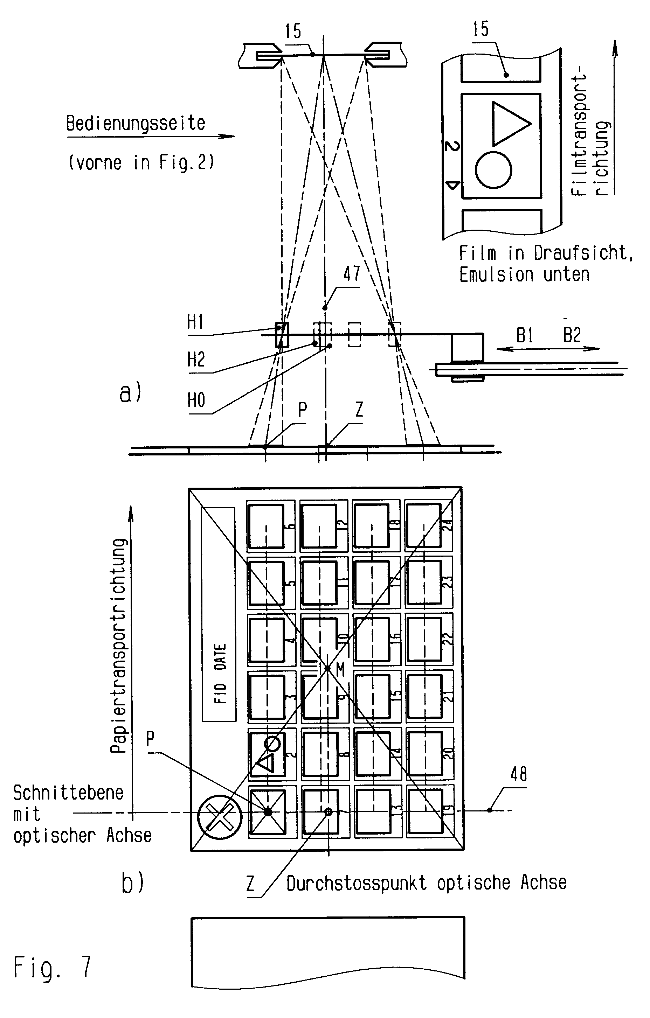

Dann ist das Photopapier in Kopierposition für das erste Element der Matrix zu bringen. Weil das IP-Objektiv 41 sich nur in einer Ebene 48 bewegen kann, die durch die optische Achse 47 und eine Senkrechte zur Transportachse des Photopapiers bestimmt ist, muss der Schwerpunkt P des Matrixbildes Nr.1 in diese Ebene zu liegen kommen. Die Verhältnisse sind in Fig. 7 näher erläutert. Für die Belichtung des Rahmenbildes und der variablen Information lag der Schwerpunkt M des Photopapiers im Durchstosspunkt Z der optischen Achse mit der Papierbühne (Fig. 7 b). Das Photopapier muss demnach um die Distanz M_Z weitertransportiert werden. Zu diesem Zweck treibt Schrittmotor 23 die Transportbänder 21 in der verlangten (Vorwärts-) Richtung an, während das Photopapier dank des Vakuums schlupffrei auf ihnen festgehalten wird. Weiter ist das IP-Objektiv 41 aus seiner bisherigen Lage auf der optischen Achse (Punkt H₀ in Fig. 7 a) in die neue Lage H₁ zu bringen, die aufgrund der optischen Gesetze exakt zu berechnen und als Parameter für den Antrieb des Objektivschlittens 42 in Speicher 52 abgelegt ist. Schliesslich ist noch Auftragsfilm 13 erneut in der Filmbühne zu positionieren, wobei sicherzustellen ist, dass Bildfeld Nr. 1 im Kopierfenster liegt. Nunmehr lässt sich das erste Bild der Matrix belichten. Die Belichtungsdaten für diesen Vorgang sind vom Erstdurchgang des Filmstreifens her in der Auswerte- und Speicherstation 52 abgelegt. Sie müssen vom Rechner noch modifiziert werden, um dem veränderten Abbildungsmassstab Rechnung zu tragen. Durch den Wegfall der erneuten Analyse des Bildes wird Zeit gewonnen. Ausserdem zeigt der Index-Print genau den gleichen Dichte- und Farbgang wie die Kopien des Erstdurchgangs.

Nachdem das erste Negativ kopiert worden ist, muss das Photopapier 15 so weit rückwärts transportiert werden, dass der Schwerpunkt von Matrixelement Nr. 2 in die Schnittebene 48 mit der optischen Achse fällt. Das IP-Objektiv 41 kann seine Lage vorderhand beibehalten, dagegen muss noch der Filmstreifen 13 um eine Negativlänge vorwärts transportiert werden, d.h. zu Nr. 2. Nachdem die Transporte abgeschlossen sind kann die Belichtung von Bildfeld Nr. 2 durchgeführt werden. Das Verfahren wird sodann wiederholt, bis auf dem Photopapier die letzte Position der ersten Matrixzeile erreicht ist. Als nächstes wird dann das erste Element der zweiten Matrixzeile belichtet. Zu diesem Zweck müssen zunächst das IP-Objektiv 41 verschoben und das Photopapier 15 in jene Stellung vorwärts transportiert werden, die es vorher für die Belichtung von Bildfeld Nr. 1 einnahm. Nunmehr kann die Belichtung der Bildfelder der zweiten Matrixzeile beginnen. Das Verfahren wird fortgesetzt, bis schliesslich der ganze Filmstreifen kopiert und sämtliche Matrixelemente belichtet sind. Damit ist auch die mehrstufige Belichtung des Index-Prints abgeschlossen. Der Filmstreifen kann aus der Filmbühne ausgefahren und das Photopapier kann der Entwicklungsmaschine zugeführt werden. Der Printer ist damit frei für die Bearbeitung des nächsten Filmstreifens.

In der Praxis sind verschiedene Abweichungen von der beschriebenen Ausführungsform möglich. Sie können zu zweckmässigeren Abläufen oder verbesserter Leistung führen.

Im Bereich des Filmtransports kann beispielsweise eine der folgenden Möglichkeiten gewählt werden (Aufzählung nicht abschliessend):
1) Normalkopien im Vorwärtslauf, IP-Kopien im Rückwärtslauf: Der Filmstreifen muss nur einmal eingelegt werden; die Sequenz bei der Aufbelichtung der Matrixfelder ist zu ändern.
2) Index-Prints im Vorwärtslauf, Normalkopien im Rückwärtslauf: Auch hier ist der Filmstreifen nur einmal einzulegen; der Index-Print wird in aufsteigender Folge der Bildfelder belichtet.
3) Zunächst reiner Abtast-Durchlauf vorwärts, anschliessend Normalkopien im Rückwärtslauf, schliesslich IP-Kopien im Vorwärtslauf.
4) Abtasten vorwärts, Index-Prints rückwärts, Normalkopien vorwärts.

Die Abtastung aller Bildfelder im Abtast-Durchlauf ermöglicht einen Vergleich der verschiedenen Negativ-Datensätze und damit beispielsweise einen Ausgleich extremer Dichtesprünge oder die Beibehaltung der Farbabstimmung zwischen Sujets, die unter gleichartigen Bedingungen aufgenommen wurden; dies führt insgesamt zu einer Verbesserung der Bildqualität.

Als Sonderfall zur vorstehenden Variante 3) ist der Verzicht auf Normalkopien anzuführen, wobei die IP-Kopien wahlweise im Vorwärts- oder Rückwärtslauf des Filmstreifens erzeugt werden können. Diese Lösung entspricht der Ausführungsform Archivkopie (Proof Print). Die Auswahl der Normalkopien (vorzugsweise in einem Grossformat) wird erst aufgrund der Beurteilung der Index-Prints getroffen. Auch bei diesen sind grössere Formate gefragt, und die einzelnen Bilder der Matrix sollten gegenüber dem Negativ leicht vergrössert sein. Ein Index-Print wird daher in diesem Anwendungsfall eine Matrix mit nur wenigen Elementen umfassen. Zu einem Filmstreifen werden deshalb in der Regel mehrere Index-Prints gehören.

Besondere Verhältnisse liegen vor, wenn das erfindungsgemässe Verfahren zur Erzeugung von Index-Prints auf einem Produktionsprinter realisiert werden soll, der bekanntlich eine reine Belichtungsmaschine darstellt, ohne Film- und Papierentwicklung. Hier sind in der Regel eine Vielzahl von Filmen zu einem langen Band auf einer Filmrolle zusammengespleisst, die vom Printer im wesentlichen nur in einer Richtung transportiert werden können. Die Strategie kann darin bestehen, dass in einem ersten Durchgang alle Normalkopien der Negative auf der Filmrolle kopiert werden, wobei die Belichtungs- und filmspezifischen Daten jedes Negativs in der Auswerte- und Speichereinheit deponiert bleiben. Wenn es sich bei den verarbeiteten Filmen um solche des Formats 135 handelt, tritt dabei zur eindeutigen Kennzeichnung des Films an die Stelle der FID-Nummer die sogenannte Twin Check-Nummer, welche im wesentlichen nichts anderes darstellt als eine laborinterne fortlaufende Nummer für jeden eingespleissten Film (vgl. z.B. US-A-4,574,692). Aufgrund dieser Daten kann sodann in einem zweiten Durchlauf des Filmbandes zu jedem Film der entsprechende Index-Print erstellt werden.

Der Index-Print-Film muss nicht unbedingt in den Führungen des normalen Filmstreifens geführt werden. Es ist nämlich auch denkbar, Einzelnegative mit den entsprechenden Masken in einem flachen Rahmen zu fixieren, der ähnlich wie das IP-Objektiv auf einem Schlitten montiert ist und wie dieses mittels Schrittmotor quer zur Transportrichtung des Photopapiers in den Strahlengang hinein und aus diesem heraus bewegt werden kann. Idealerweise muss dabei das IP-Negativ in der Ebene der normalen Filmführung liegen und diese daher kreuzen. Wegen der grossen Tiefenschärfe des IP-Objektivs ist jedoch eine gewisse Abweichung aus konstruktiven Gründen zulässig.

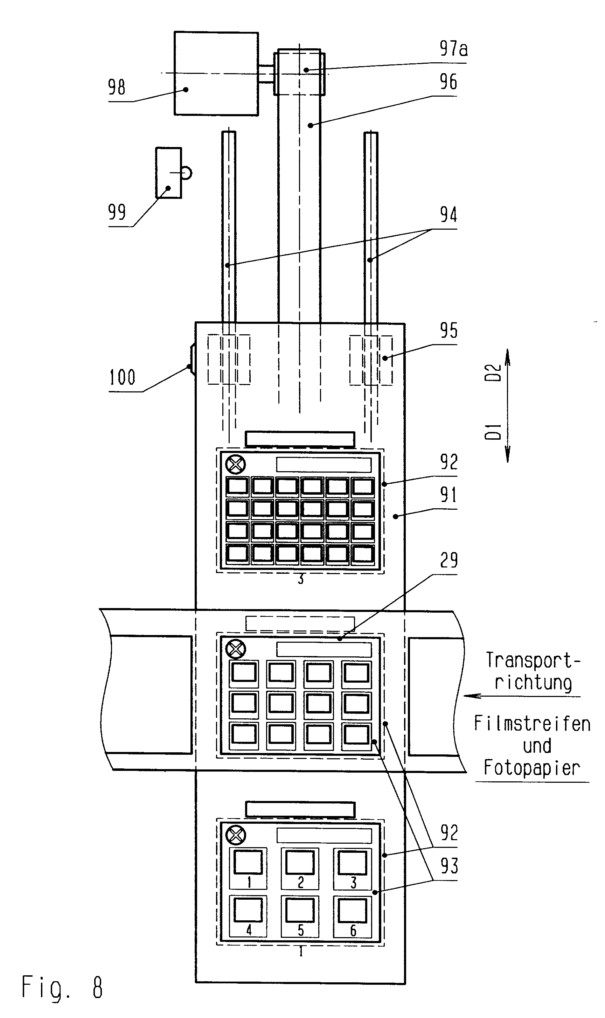

Fig. 8 erläutert diese Lösung in schematischer Darstellung. Ein Trägerrahmen 91 weist Durchbrüche 92 auf, die durch aufgeklebte IP-Negative 93 abgedeckt sind. Der Trägerrahmen läuft auf einem Schienenpaar 94, mit dem er über Führungshülsen 95 verbunden ist. Er ist ebenfalls mit einem Zahnriemen 96 verbunden, der über eine Rollenpaar 97 a,b (b nicht dargestellt) läuft und von einem Schrittmotor 98 angetrieben wird. Der Trägerrahmen kreuzt in seiner Betriebsstellung die Filmführung für den hier nicht vorhandenen Filmstreifen 13. Er hat eine Ruhestellung ausserhalb der Filmführung. Sie wird durch einen Endschalter 99 im Zusammenwirken mit einer Erhebung 100 am Trägerrahmen bestimmt. Das gewünschte IP-Negativ lässt sich durch Abzählen der Transportschritte aus dieser Ruhestellung positionieren.

Das Rahmenbild braucht nicht unbedingt als Vergrösserung ab einem Negativ projiziert zu werden. Es kann im Prinzip auch als Kontaktnegativ in natürlicher Grösse in einem Spannrahmen auf das Photopapier gelegt und durch das filmfreie Kopierfenster in der Filmbühne von der normalen Lichtquelle (Halogenlampe) durch das Projektionsobjektiv 33 ausgeleuchtet werden.

Bisher ist angenommen worden, dass mit der Aufbelichtung des Rahmenbildes für den Index-Print auch die Bildfeldnummern in die Elemente der Matrix einbelichtet werden. Dies ist nicht unbedingt notwendig. Vielmehr können die Bildfeldnummern, welche beim gebräuchlichen Filmformat 135 unterhalb jedes Negativs angeordnet sind, auch zusammen mit dem Bild optisch übertragen werden. Dabei wird allerdings bei starker Verkleinerung bald einmal die Grenze der Lesbarkeit erreicht. Ausserdem muss das Kopierfenster 29 in der Filmbühne einen Ausschnitt aufweisen, der die Bildnummer für die Projektion freigibt.

Die Bildfeldnummern können gewünschtenfalls auch wie variable Daten behandelt und den Datensätzen für die Negative entnommen werden. Weil sie über das ganze Bildfeld verteilt sind, sollten sie am besten von einem selbstleuchtenden oder beleuchtbaren Display, beispielsweise einer LCD-Matrix, einer LED-Matrix oder einer Kathodenstrahlröhre dargestellt und vorzugsweise über ein optisches System in die Filmebene nahe dem Vorlagefenster eingespiegelt werden. Durch kurzzeitiges Aktivieren bzw. Einschalten der Beleuchtung des Displays können dann diese Daten zusammen mit der Belichtung des Index-Prints über dasselbe Objektiv auf das Papier aufbelichtet werden. Gegebenenfalls können diese Daten auch von einer (relativ grossen und entsprechend teuren) LCD- oder LED-Matrix im Kontakt aufbelichtet werden. Bei gleicher Gelegenheit wären die übrigen veränderlichen Daten (FID-Nummer, Tagesdatum) zu übertragen.

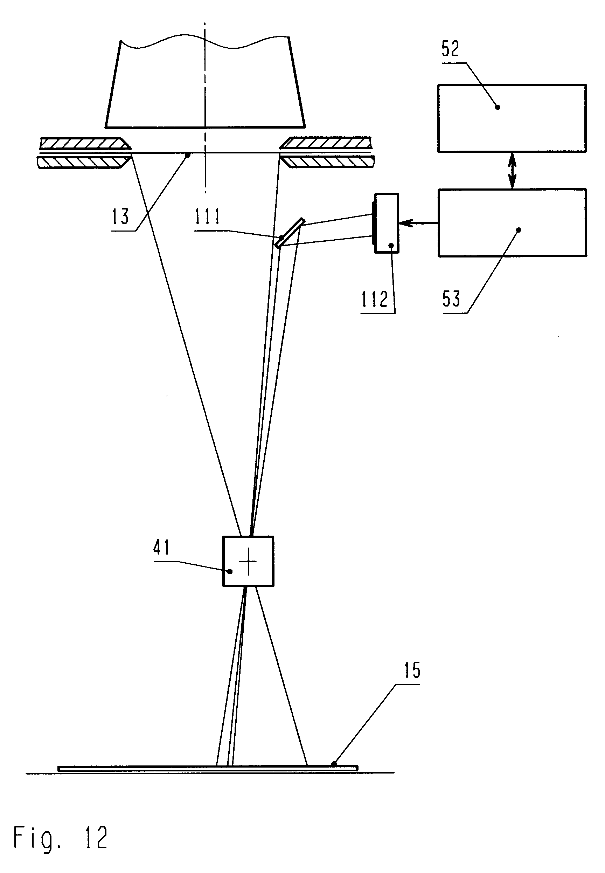

Fig. 12 zeigt, wie die Einblendung der Bildfeldnummern mittels eines selbstleuchtenden Displays realisiert sein kann. Relativ nahe der Transportebene des Filmstreifens 13 ist etwas ausserhalb des normalen Abbildungsstrahlengangs ein kleiner Umlenkspiegel 111 angeordnet, welcher das von einem selbstleuchtenden LCD-Display 112 kommende Licht auf das photographische Papier 15 umlenkt. Das Display 112 ist in an sich bekannter Weise an den Rechner 53 und den mit ihm verbundenen Speicher 52 angeschlossen und wird vom Rechner zur Darstellung der jeweils zugeordneten Bildfeldnummern angesteuert.

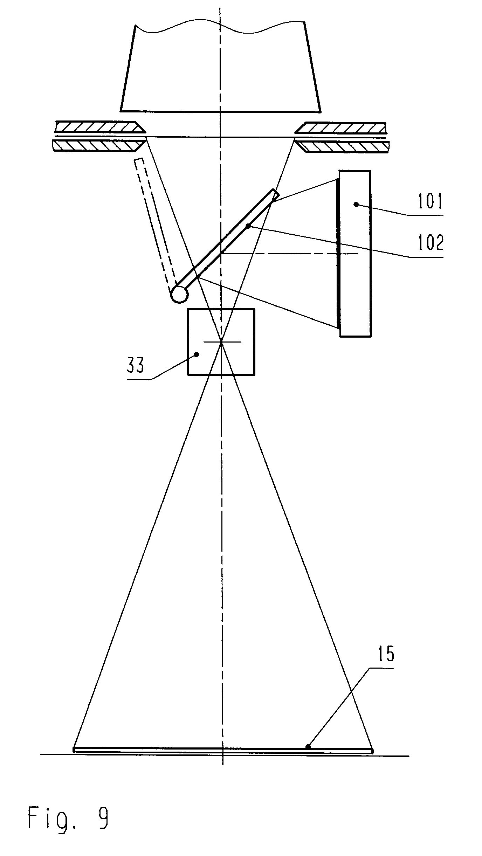

Fig. 9 zeigt eine Ausführungsvariante mit einer LCD-Matrix 101 und einem Schwenkspiegel 102. Weil das ganze Photopapier auszuleuchten ist, wird das Vergrösserungsobjektiv 33 zur Projektion verwendet.

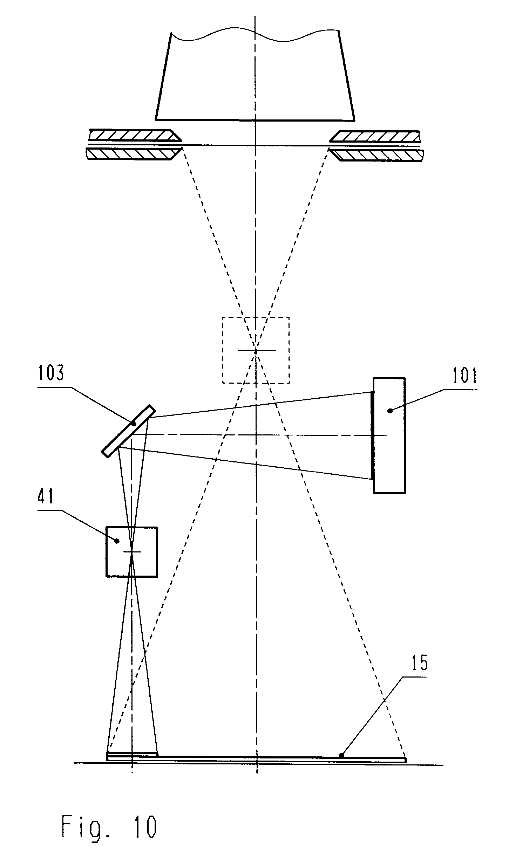

Fig. 10 stellt die Situation dar, wo nur die variable Information in die Randzone des Index-Prints einzubelichten ist. In diesem Fall lässt sich die LCD-Matrix 101 analog der Ausführungsform gemäss Fig. 12 über einen festen Spiegel 103 ausserhalb des Bereiches der Bildstrahlen und über das IP-Objektiv 41 verkleinert abbilden.

Im beschriebenen Ausführungsbeispiel ist die sukzessive Belichtung der Index-Print-Matrix durch die koordinierte Verschiebung von IP-Objektiv und Photopapier bewirkt. Statt dessen könnte auch das IP-Objektiv für sich allein den Bereich der ganzen Matrix belichten, wenn es auf einem Kreuzschlitten montiert wäre. Die weiteren Möglichkeiten, entweder die Filmbühne oder die Papierbühne eine Bewegung in beiden Achsrichtungen ausführen zu lassen, sind prinzipiell machbar aber weniger praktikabel.

In diesem Zusammenhang könnten als Alternative zur vorgeschlagenen Lösung mit der Numerierung der Bildfelder in der Matrix zeilenweise von links nach rechts und von oben nach unten auch zunächst die erste Spalte von oben nach unten und dann analog die weiteren Spalten sukzessive von links nach rechts numeriert werden. Die Auswirkung wären weniger Bewegungen des Papiertransports, dafür vermehrte Bewegungen des IP-Objektivs. Der Kunde hätte sich mit einer eher ungewohnten Darstellungsweise anzufreunden.

Wegen der wiederholten Belichtungen auf dasselbe Blatt Photopapier bei Index-Prints ist dieses wesentlich länger als bei Normalprints dem Streulicht der Umgebung ausgesetzt. Um schädliche Auswirkungen auf die Qualität der Index-Prints zu vermeiden, sind u.U. Schutzmassnahmen gegen Streulichteinflüsse notwendig.

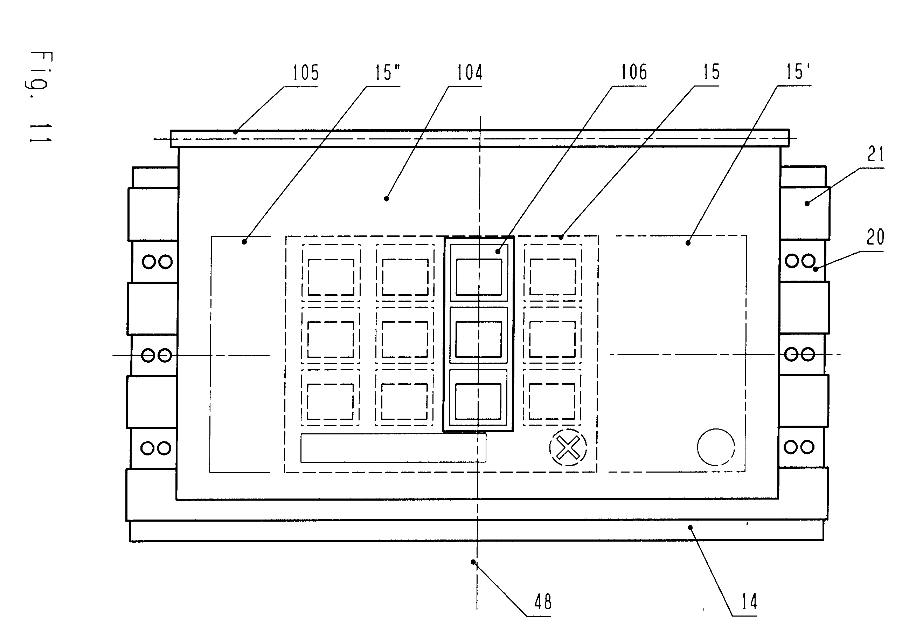

Fig. 11 zeigt eine Lösungsmöglichkeit, die zum bisher beschriebenen Ausführungsbeispiel passt. Auf der Papierbühne 14 mit Vakuumkasten 20 und Transportbändern 21 liegt das Photopapier 15 in einer Position für das Aufbelichten der Bilder in den Matrix-Elementen. Alle Belichtungen erfolgen mit dem IP-Objektiv in der Ebene 48. Das Photopapier wird dabei zwischen den Extremlagen 15' und 15'' hin und her bewegt. Eine Abdeckung 104, die um eine Welle 105 in eine Lege wenig über dem Photopapier einschwenkbar ist und in der zentralen Partie eine schlitzförmige Ausnehmung 106 aufweist, verwehrt dem Streulicht aus dem Raum oberhalb der Papierbühne den Zutritt zum Photopapier. Die Abdeckung nimmt eine Ruhelage ausserhalb des Projektionsstrahlenganges ein, wenn keine Bilder der IP-Matrix zu belichten sind.

Das erfindungsgemässe Verfahren ist grundsätzlich auch dazu geeignet, Index-Prints zu gerahmten Diapositiven anzufertigen. Natürlich erfordert die Verarbeitung solcher Dias spezielle Dia-Printer bzw. Printer mit Dia-Adaptern. Solche Printer sind an sich bekannt und bedürfen daher keiner näheren Erläuterung. Index-Prints auf dieser Basis können zu Dokumentationszwecken, etwa für einen Vortrag, nützlich sein. Sie erweisen sich auch als Sicherheitswerkzeuge wertvoll, um beispielsweise rasch wieder Ordnung herzustellen, falls die Diapositive im Magazin eines Projektors durch einen Betriebsunfall durcheinander geraten sein sollten.

Für die Zukunft sind neue Filmgenerationen mit magnetischer Beschichtung zu erwarten. Filmspezifische Informationen, die bei den aktuellen Produkten in Form von Barcodes auf den Filmen vorhanden sind, werden dabei zusätzlich oder als Alternative magnetisch aufgezeichnet sein. Die Erfindung wird diese Informationen ebenso mit Vorteil verwenden können wie weitere, beispielsweise kameraspezifische oder benutzerspezifische Daten.

Wie schon weiter vorne erwähnt, ist die Erfindung nicht auf das Aufbringen von Bildfeldnummern und speziell von vom Filmstreifen abgelesenen oder sonstwie übertragenen Bildfeldnummern als individuelle Bildfeldinformationen beschränkt. Vielmehr können als individuelle Bildfeldinformationen auch andere individuelle, bildbezogene Bildfeldidentifikationsdaten herangezogen werden. Beispielsweise können solche Bildidentifikationsdaten, wenn keine entsprechenden Daten auf dem Filmstreifen bzw. der Kopiervorlage vorhanden sind, während der Herstellung des Index-Prints im Rechner erzeugt oder fest vorgegeben sein. In letzterem Falle können diese Bildfeldidentifikationsdaten auch Bestandteil der festen Information des Rahmenbilds sein. Neben Nummern können diese Bildidentifikationsdaten auch andere bildfeldbezogene Informationen z.B. in Form von alphanumerischen Zeichen oder anderen Symbolen enthalten. Die Art der Bildfeldidentifikationsdaten kann sich auch nach eventuell auf dem Filmstreifen oder der entsprechenden Kopiervorlage vorhandenen und von diesem abgelesenen bildfeldbezogenen Informationen richten.

Die mannigfachen Vorteile der Erfindung sind offensichtlich:
- Index-Prints ermöglichen eine Uebersicht über den ganzen Auftrag ohne physische Konsultation der Negative, die somit geschützt bleiben.
- Die Bilder des Index-Prints sind individuell korrigiert und stimmen in dieser Beziehung mit den Normalabzügen überein.
- Die Bilder des Index-Prints weisen photographische Qualität auf. Ihre Auflösung ist nicht durch digitale Rasterung beeinträchtigt.
- Die Zuordnung der Index-Print-Bilder zu den Negativen auf dem Filmstreifen ist durch die Bildfeldnummern gewährleistet.
- Jeder Index-Print kann über die FID- oder Twin Check-Nummer eindeutig einem bestimmten Film zugeordnet werden.
- Index-Prints können durch entsprechende Gestaltung des Rahmenbildes auch als Werbeträger eingesetzt werden.
- Gerätemässig bleibt der Aufwand in Grenzen, weil vorhandene Baugruppen für die Erzeugung der Index-Prints mitbenützt werden können.

## Patentansprüche

1. Verfahren zur Erzeugung von Index-Prints auf einem photographischen Printer, bei dem eine vorbestimmte Anzahl aufeinanderfolgender photographischen Vorlagen auf einem Filmstreifen (13) hinsichtlich ihrer Dichtewerte in den drei Grundfarben und ggf. ihrer Bildfeldnummern (8) sowie eventueller weiterer, filmbezogener Daten vorzugsweise punktweise photoelektrisch abgetastet, die ermittelten Dichte-Abtastwerte in Printersteuerungswerte umgesetzt und diese Printersteuerungswerte und die übrigen Abtastwerte digital abgespeichert werden und, nachdem die Printersteuerungswerte und übrigen Abtastwerte aller in der vorbestimmten Anzahl enthaltenen Vorlagen zur Verfügung stehen, diese zum Aufbau eines aus Aufsichtsbildern zusammengesetzten Index-Prints (2) herangezogen werden, dessen Einzelbilder (7) in Form einer zweidimensionalen Elemente-Matrix mit Spaltenelementen und Zeilenelementen gruppiert sind, dadurch gekennzeichnet, dass die Einzelbilder (7) der Matrix rein photographisch direkt von den Vorlagen auf dem Filmstreifen (13) der Reihe nach belichtet werden, wobei die erforderlichen Belichtungsdaten aus den digital abgespeicherten Printersteuerungswerten hergeleitet werden und die Einzelbilder des Index-Prints (2) mit individuellen Bildfeldinformationen (8) versehen werden.

2. Verfahren nach Anspruch 1, dadurch gekennzeichnet, dass Index-Prints (2) unabhängig von normalen einzelnen Prints erzeugt werden, wobei die Vorlagen auf dem Filmstreifen (13) der Reihe nach abgetastet, die Abtastdaten ausgewertet und direkt als Belichtungswerte zur Uebertragung der einzelnen Vorlagen auf den Index-Print (2) verwendet werden und wobei die Bilder (7) auf dem Index-Print (2) gegenüber der Vorlage in leichter Vergrösserung wiedergegeben werden, so dass sich der Index-Print (2) als Archivkopie (Proof Print) verwenden lässt.

3. Verfahren nach Anspruch 1, dadurch gekennzeichnet, dass Index-Prints (2) als Ergänzung zu normalen einzelnen Prints von den Vorlagen des Filmstreifens (13) erzeugt werden.

4. Verfahren nach Anspruch 3, dadurch gekennzeichnet, dass die normalen einzelnen Prints zuerst erzeugt und die Abtastwerte jeder Vorlage einerseits unmittelbar für die Erzeugung der einzelnen Prints dieser Vorlage ausgewertet und andererseits zur späteren Verwendung für den Index-Print (2) abgespeichert werden, und dass die Vorlagen auf dem Filmstreifen (13) mittels eines speziellen Index-Print-Objektivs (41) in gegenüber den normalen Prints reduziertem Massstab auf dem Index-Print (2) abgebildet werden.

5. Verfahren nach Anspruch 4, dadurch gekennzeichnet, dass die normalen Prints während einer Vorwärtsbewegung des Filmstreifens (13) und der Index-Print (2) während einer Rückwärtsbewegung des Filmstreifens (13) erzeugt werden.

6. Verfahren nach Anspruch 3, dadurch gekennzeichnet, dass während einer Vorwärtsbewegung des Filmstreifens (13) die Abtastung der Vorlagen und die Belichtung des Index-Prints (2) erfolgen, während die normalen Prints während einer Rückwärtsbewegung des Filmstreifens (13) erzeugt werden.

7. Verfahren nach Anspruch 3, dadurch gekennzeichnet, dass während einer ersten Vorwärtsbewegung des Filmstreifens (13) die Abtastung der Vorlagen erfolgt, dass während einer Rückwärtsbewegung des Filmstreifens (13) die normalen Prints oder der Index-Print (2) erzeugt werden und dass während einer zweiten Vorwärtsbewegung des Filmstreifens (13) der Index-Print (2) bzw. die normalen Prints erzeugt werden.

8. Verfahren nach einem der vorangehenden Ansprüche, dadurch gekennzeichnet, dass zur schrittweisen Belichtung des Index-Prints (2) mit den Vorlagen des Filmstreifens (13) die Zentren der Spaltenelemente mit einer senkrecht zur Transportrichtung des Photopapiers (15) und durch die optische Achse (47) des abbildenden Objektivs (41) verlaufenden Ebene zur Deckung gebracht werden, indem das Photopapier (15) mittels des vorhandenen Papiertransportsystems (18-25) entsprechend vorgeschoben wird, während die Zentren der Zeilenelemente durch Verschiebung des abbildenden Objektivs (41) in der erwähnten Ebene stufenweise angesteuert werden.

9. Verfahren nach einem der Ansprüche 1-8, dadurch gekennzeichnet, dass zur schrittweisen Belichtung des Index-Prints (2) mit den Vorlagen des Filmstreifens (13) bei feststehendem Photopapier (15) die Zentren der Spaltenelemente und der Zeilenelemente durch stufenweise Verschiebungen des abbildenden Objektivs (41) in Richtung parallel und quer zur Transportrichtung des Photopapiers (15) angesteuert werden.

10. Verfahren nach einem der vorangehenden Ansprüche, dadurch gekennzeichnet, dass zur Reduktion störender Streulichteinflüsse während der Belichtung der einzelnen Matrixelemente (7) des Index-Prints (2) mindestens ein Teil der übrigen Matrix elemente gegen Lichteinfall geschützt wird.

11. Verfahren nach einem der vorangehenden Ansprüche, dadurch gekennzeichnet, dass die Index-Prints (2) aus drei verschachtelten Teilfeldern (3-8) aufgebaut sind, nämlich einem Rahmenbild (3) mit fixen, vorausbestimmten Text- und/oder Graphik-Informationen, einem Datenfeld (5) mit variablen Text-Informationen und einer Felder-Matrix (7) mit den Abbildungen der Vorlagen, wobei das Rahmenbild (3) ausgesparte Flächen (6) für das Datenfeld (5) und die Felder-Matrix (7) mit den zugehörigen Bildfeldinformationen (8) aufweist.

12. Verfahren nach Anspruch 11, dadurch gekennzeichnet, dass das Rahmenbild (3) durch photographische Projektion einer Rahmenvorlage (61-63) erzeugt wird, die Teil eines separaten Index-Print-Filmstreifens (60) ist.

13. Verfahren nach Anspruch 12, dadurch gekennzeichnet, dass der Index-Print-Filmstreifen (60) mehrere Rahmenvorlagen (61-63) enthält, die sich in der Anzahl der Matrix-Elemente und/oder der graphischen Gestaltung unterscheiden, und wobei sich die Auswahl der jeweils verwendeten Rahmenvorlage (61-63) nach den Eigenschaften des verarbeiteten Filmstreifens (13) richtet.

14. Verfahren nach einem der Ansprüche 11-13, dadurch gekennzeichnet, dass die Rahmenvorlagen (61-63) die Bildfeldinformationen (8) als fix vorausbestimmte Text- und/oder Graphikinformationen enthält.

15. Verfahren nach einem der Ansprüche 11-14, dadurch gekennzeichnet, dass zur photographischen Uebertragung der Rahmenvorlage (61-63) dasselbe Projektionssystem (30) wie für die normalen Kopiervorgänge des Printers verwendet wird.

16. Verfahren nach einem der Ansprüche 11-15, dadurch gekennzeichnet, dass die variablen Daten durch Kontaktbelichtung oder durch optische Projektion einer selbstleuchtenden oder beleuchtbaren digitalen Anzeigeeinheit (82; 112) auf das Photopapier (15) übertragen werden.

17. Verfahren nach einem der vorangehenden Ansprüche, dadurch gekennzeichnet, dass der bearbeitete Filmstreifen (13) ein Negativstreifen ist.

18. Verfahren nach einem der Ansprüche 1 - 17, dadurch gekennzeichnet, dass der verwendete Filmstreifen (13) ein Umkehrfilmstreifen ist.

19. Verfahren nach Anspruch 18, dadurch gekennzeichnet, dass anstelle eines Umkehrfilmstreifens einzelne gerahmte Diapositive verarbeitet werden.

20. Verfahren nach einem der vorangehenden Ansprüche, dadurch gekennzeichnet, dass die einzelnen Bilder (7) auf dem Index-Print (2) dem Original entsprechend aufrecht und seitenrichtig dargestellt werden.

21. Verfahren nach einem der vorangehenden Ansprüche, dadurch gekennzeichnet, dass die einzelnen Bilder (7) des Index-Prints (2) hinsichtlich Dichte und Farbe individuell korrigiert sind.

22. Verfahren nach einem der Ansprüche 3-21, dadurch gekennzeichnet, dass die für die Herstellung der einzelnen Bilder (7) des Index-Prints (2) verwendeten Korrekturen mit jenen übereinstimmen, die auch für die Erzeugung der normalen Prints verwendet werden.

23. Verfahren nach einem der vorangehenden Ansprüche, dadurch gekennzeichnet, dass die individuellen Korrekturen eines Bildes teilweise durch Verknüpfung der zugehörigen Daten mit den abgespeicherten Daten anderer Vorlagen auf dem Filmstreifen gewonnen werden.

24. Verfahren nach einem der Ansprüche 11-23, dadurch gekennzeichnet, dass die Text- und Graphikinformationen den Namen des Verarbeitungslabors, allenfalls einen Werbetext und/oder ein Firmenlogo enthalten.

25. Verfahren nach einem der Ansprüche 11-24, dadurch gekennzeichnet, dass die variablen Daten eine Filmidentifikationsnummer und/oder das Tagesdatum enthalten.

26. Verfahren nach einem der Ansprüche 11-25, dadurch gekennzeichnet, dass die variablen Daten eine laborinterne Verarbeitungsnummer (Twin Check-Nummer) und/oder das Tagesdatum enthalten.

27. Verfahren nach einem der vorangehenden Ansprüche, dadurch gekennzeichnet, dass als individuelle Bildfeldinformationen die auf dem Filmstreifen (13) vorhandenen und von diesem abgetasteten und gespeicherten Bildfeldnummern (8) auf den Index-Print (2) aufgebracht werden.

28. Verfahren nach einem der Ansprüche 1-26, dadurch gekennzeichnet, dass als individuelle Bildfeldinformationen individuell erzeugte oder fest vorgegebene Bildfeldidentifikationsdaten auf den Index-Print (2) aufgebracht werden.

29. Vorrichtung zur Erzeugung von Index-Prints mit einem photographischen Printer, der in einem lichtdichten Gehäuse (10) eine Lichtquelle (31), eine Filmbühne (11) zur Aufnahme und zum Transport eines Vorlage-Filmstreifens (13), eine Papierbühne (14) für die Positionierung und den Transport von photographischem Papier (15), ein Projektionsobjektiv (33) zum Abbilden von auf dem Vorlage-Filmstreifen (13) befindlichen Kopiervorlagen auf das photographische Papier (15) und eine Abtaststation (12) für die vorzugsweise punktweise Abtastung der Bildfläche der Kopiervorlagen und von ggf. auf dem Vorlage-Filmstreifen (13) vorhandenen Bildfeldinformationen, insbesondere Bildfeldnummern (8) und eventuellen weiteren Daten enthält und welcher ferner einen Rechner (53) umfasst, der aus den von der Abtaststation (12) ermittelten Abtastwerten Belichtungssteuerungswerte ermittelt, Abtastwerte und/oder daraus ermittelte Werte in einer Speichereinheit (52) speichert und die Funktionsabläufe des Printers koordiniert und steuert, dadurch gekennzeichnet, dass der Printer zusätzlich mit einem Index-Print-Objektiv (41) ausgestattet ist, welches alternativ zum Projektionsobjektiv (33) in den Abbildungsstrahlengang (47) einbringbar ist und welches durch den Rechner (53) gesteuert wenigstens in einer Dimension so beweglich angeordnet ist, dass es eine Anzahl von einzelnen Kopiervorlagen des Vorlage-Filmstreifens (13) als Index-Print (2) in einer matrix-förmigen Anordnung auf das photographische Papier (15) abbildet, und dass der Printer ferner mit Aufbelichtungsmitteln (111,112) versehen ist, welche die ggf. vom Vorlage-Filmstreifen (13) abgetasteten oder individuell erzeugten oder fest vorgegebenen individuellen Bildfeldinformationen (8) in räumlicher Zuordnung zu den Abbildungen (7) der einzelnen Kopiervorlagen des Index-Prints (2) auf das photographische Papier (15) aufbelichten.

30. Vorrichtung nach Anspruch 29, dadurch gekennzeichnet, dass das Index-Print-Objektiv (41) stufenweise quer zur Transportrichtung des photographischen Papiers (15) beweglich ist.

31. Vorrichtung nach Anspruch 30, dadurch gekennzeichnet, dass das Index-Print-Objektiv (41) stufenweise parallel zur Transportrichtung des photographischen Papiers (15) beweglich ist.

32. Vorrichtung nach einem der Ansprüche 29-31, dadurch gekennzeichnet, dass die Aufbelichtungsmittel (111,112) eine vom Rechner (53) angesteuerte selbstleuchtende oder beleuchtbare digitale Anzeigeeinheit (112) umfassen.

33. Vorrichtung nach einem der Ansprüche 29-32, dadurch gekennzeichnet, dass der Printer Rahmenprojektionsmittel (31,33,60-70) zur Aufbelichtung eines Rahmenbilds (3) auf das photographische Papier (15) umfasst.

34. Vorrichtung nach Anspruch 33, dadurch gekennzeichnet, dass die Rahmenprojektionsmittel (31,33,60-70) einen Index-Print-Filmstreifen (60) mit wenigstens einer Rahmenbild-Vorlage (61-63) umfassen, und dass vom Rechner (53) angesteuerte Transportmittel (66-70) vorgesehen sind, welche den Index-Print-Filmstreifen (60) in den Abbildungsstrahlengang (47) des Projektionsobjektivs (33) einführen und wieder aus diesem entfernen.

35. Vorrichtung nach einem der Ansprüche 29-34, dadurch gekennzeichnet, dass der Printer Streulichtabschirmungsmittel (104-106)) umfasst, welche während der Aufbelichtung der einzelnen Bilder (7) des Index-Prints (2) Streulicht von den bereits aufbelichteten Bildern abschirmt.
